# EUROPEAN PATENT SPECIFICATION

(11) **EP 0 437 911 B1**
(45) Date of publication and mention of the grant of the patent: **18.11.1993**
(21) Application number: 90300579.1
(22) Date of filing: 19.01.1990
(51) Int. Cl.: B01J 20/32

(54) **Method for producing dual zone materials by catalyzed halosilylation**
Methode zur Herstellung von Dual-Zone-Materialien durch katalysierte Halosilylation
Méthode de préparation de matériaux à zone duale par halosilylation catalysée

(43) Date of publication of application: 24.07.1991
(73) Proprietor: DOW CORNING CORPORATION, Midland Michigan 48686-0994 (US)
(72) Inventor: Williams, Dwight Edward, Midland, Michigan (US); Tangney, Thomas John, Midland, Michigan (US)
(74) Representative: Laredo, Jack Joseph

(56) References cited:
- EP-A- 0 161 058
- US-A- 4 705 725
- US-A- 4 778 600
- TETRAHEDRON LETTERS, vol. 22, no. 36, 1981, pages 3455-3458, Pergamon Press Ltd, GB; E.J. COREY et al.: "Studies with trialkylsillyltriflates: New syntheses and applications"

## Description

The present invention relates to a method for producing dual zone porous materials having an external zone bearing silyl groups of a first type immobilized on the external surfaces of the porous material and internal zone having silyl groups of a second type immobilized on the internal surfaces of the porous material and the dual zone materials so produced. More particularly, it relates to a method for catalyzed halosilylation of predominantly the external surfaces of a porous hydroxyl-bearing support and production of a dual zone material.

In US patent No. 4,782,040, there are disclosed dual surface (more properly termed dual zone) porous materials made by treating a porous hydroxyl-bearing support, such as porous silica, alumina, zirconia, etc., with substoichiometric amounts of an ultrafast silylating agent. This agent is choosen from those which are so reactive that the resulting surface group is immobilized in the external zone of the porous support before the agent has had time to migrate deeply into the porous internal zone. A subsequent silylation reaction can be employed to convert residual hydroxyl groups, which reside predominantly in the internal zone, to a second immobilized group of another type. See also, Williams & Tangney, Silanes, Surfaces & Interfaces, D. E. Leyden, ed., Gordon & Breach Publisher, 1986, P. 471 ff.

In US patent no. 4,782,040 the disclosed ultrafast silylating agents are reactive silane intermediates and the ultrafast silylating agents are silanes having "leaving groups" such as i) substituted amides, ii) substituted amines or iii) thioethers. It is believed that these facile leaving groups lower the activation energy required for reaction with surface hydroxyl groups and thus enhance the extent to which the silane can be captured by covalent bond formation in the external zone of the porous material, that is, captured early during its diffusion path into said material.

As stated in US Patent No. 4,782,040, traditional silylation reactions are generally not fast enough to permit preferential silylation of the external surface of the porous support. "Traditional silylation" is described in Plueddemann, Encyclopedia of Chemical Technology, 3rd ed., Vol. 20, page 962 et seq. Plueddemnn states that silylation is the displacement of active hydrogen from an organic molecule by silyl groups where "The active hydrogen is usually OH, NH or SH and the silylating agent is usually a trimethylsilyl halide or a nitrogen-functional compound. A mixture of silylating agents may be used; a mixture of trimethychlorosilane and hexamethyldisilazane is more reactive than either reagent alone and the by-products combine to form neutral ammonium chloride."

Halosilanes, in particular, have been tried, but have been found to be insufficient to produce dual zone porous materials. For example, M. L. Hunnicutt and J. M. Harris in "Reactivity of Organosilane Reagents on Microparticulate Silica," Anal. Chem., Vol. 58, 1986, pp. 748-752 discuss the use of halosilanes in an attempt to demonstrate pore diffusion control of silica silylation. Hunnicutt and Harris discuss the results of competitive surface reactions between binary organosilane mixtures and silica gel. The organosilane mixtures used include mixtures of two haloalkylsilanes such as (1-bromomethyl)dimethylmonochlorosilane, (1-chloromethyl)dimethylmonochlorosilane or (3-chloropropyl)dimethylmonochlorosilane, as well as mixtures of a haloalkylsilane with an alkylsilane such as trimethylchlorosilane (TMCS) or hexamethyldisilazane (HMDS). In a number of instances a catalyst such as pyridine was added to the silica slurry prior to silane addition for base catalyzed reactions. Hunnicutt and Harris showed that their reaction did not display pore diffusion control. Thus they could not have produced dual zone materials (DZMs) with respect to differential distribution of their chosen immobilized groups. This outcome is believed to be due to several factors. Most importantly, mixtures of chlorosilanes of the type used by Hunnicutt and Harris do not react with sufficient speed and differentiality even when the reaction is catalyzed with pyridine.

Furthermore, the reaction conditions were not adjusted so as to produce DZMs even from the point of view of selective capture of both chlorosilanes together in the external zone. Firstly, the solvent they used was chloroform which is higly polar and is known to be a proton donor in hydrogen-bonded complexes. Such solvents have been found to reduce pore diffusion control, probably by sequestering the surface reactive sites (silanol) and thus slowing down the reaction rate. Protic solvents such as ethanol are even more deleterious since the halosilane is solvolyzed and transformed into the less reactive ethoxysilane. Secondly, Hunnicutt and Harris used excessive amounts of silane averaging 36 molecules/nM² of silica surface, which would saturate the silica and thus afford a uniformly saturated surface treatment rather than a dual zone structure. Thirdly, the rate of silane addition to the silica slurry was excessively fast at about 0.3 molecules/nM²/minute. Accordingly, individual silica particles would be subjected to unusual doses of silane and the resultant particle-to-particle heterogeneity would overcome any intraparticle inhomogeneity (dual zone structure) that might otherwise occur. Accordingly, even though Hunnicutt and Harris conducted what could be described as a catalyzed halosilane reaction, Hunnicutt and Harris do not teach one of ordinary skill in the art how to produce dual zone materials by means of such reaction mechanisms.

And yet, it is known to be desirable to produce dual zone porous materials having silyl groups of one type predominantly on the external surface and silyl groups of another type predominantly on the internal surface in order to provide on the external and internal surfaces differentially selective adsorbents, for example, for specific chromatographic and catalytic applications. It would also be desirable to do so with halosilane reactants which are relatively inexpensive and readily available. To date, however, it has not been possible to use halosilane reactants for this purpose.

Accordingly, the need remains for a method for halosilylation of predominantly the external surfaces of a porous hydroxyl-bearing support in the production of dual zone porous materials.

The present invention meets that need by providing a method for production of dual zone materials by use of catalyzed halosilanes. The preferred halosilanes used in the present invention have silyl groups of a first type which, following the catalyzed silylation, will form silyl groups of a first type predominantly on the external surfaces of a porous support. Thus the preferred halosilanes bear at least one organic or organofunctional group, such as perfluorobutylethylenedimethylsilyl, chloropropylsilyl, SiC₃H₆O(CH₂CH₂O)ₐR wherein "a" is 0-10 and R is alkyl, aryl or acetyl and 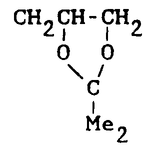
wherein Me is methyl. Preferred are silyl groups having the formula Me₃₋ₘC₂H₄CₙX₂ₙ₊₁, wherein X is a halogen, n is 1 or more, Me is methyl and m is 1-3.

The halosilano is added in an amount which does not exceed 2.00 molecules/nM² of the silica in the suspension.

The halosilane also has a one or more leaving groups "L" attached to the silicon, at least one of the leaving groups being a non-fluorine halogen group, i.e., a chloride, bromide or iodide, which when catalyzed reacts with the hydroxyl groups on the external surfaces of the porous support. Mixed leaving groups in which at least one is a non-fluorine halogen and the others are slow leaving groups such as alkoxy or acetoxy are also suitable.

Thus, the preferred halosilane has the formula LₘMe₃₋ₘSiC₂H₄CₙX₂ₙ₊₁, wherein L is a non-fluorine halogen, Me is methyl, X is a halogen which may be the same as or different than L, n is 1 or more and m is 1-3. The halosilane may be applied in a solvent based mixture.

The halosilane mixture is added to a porous support suspension formed by mixing the porous support, such as a porous metalloid oxide, a porous metallic oxide or mixtures thereof (preferably in particulate form and most preferably particulate silica) with a solvent. The preferred solvent is an aprotic solvent which will not solvolyze the halosilane. Most preferred are non-polar solvents such as hexane, octane, decane, toluene or mixtures thereof since such non-polar solvents will not retard the reaction rate due to their minimal interaction with the surface reactive sites. The porous support suspension also contains the catalyst. The catalyst is a lewis base catalyst, preferably a basic amine such as pyridine, imidazole or ammonia. Nucleophilic agents known to strongly promote silane solvolysis such as hexamethylphosphoramide or dimethylsulfoxide (DMSO) are also effective.

As a result of contacting the hydroxyl bearing porous support suspension containing a catalyst with the halosilane, silyl groups of the first type are formed predominantly on the external surfaces of the porous support. This alone is sufficient to create a dual zone material if silica is used as the porous support and to the extent that silanol groups remain unreacted in the internal zone. Preferably, however, the porous support is subsequently contacted with a second silane having silyl groups of a second type (different from those of the first type). That silane should be one capable of diffusing into the interior of the porous support and forming covalent bonds by reacting with the hydroxyl groups on the porous support to form silyl groups of the second type on the internal surfaces of the porous support.

Preferred is a second silane having the formula R₄₋ₑSiXₑ, wherein R is independently selected from hydrogen, alkyl groups having 1 to 20 carbon atoms, phenyl, vinyl and allyl; X is a hydrolyzable radical selected from chlorine, alkoxy having 1 to 4 carbon atoms, acetoxy, amine and amido radicals; and e has a value of 1, 2 or 3. Other organofunctional silanes may also be used. Most preferred is uncatalyzed trimethylchlorosilane.

When a second silane having silyls of a second type is subsequently brought into contact with the porous support, it, then, reacts predominantly with the hydroxyl groups on the internal surfaces of the porous support. This is because the majority of the hydroxyl groups on the external surfaces have already been consumed by the catalyzed halosilylation. While some reaction with hydroxyl groups which remain on the external surfaces may take place, the catalyzed halosilylation route offers a good quality dual zone material in that the external zone contains predominantly silyl groups of the first type while the internal zone contains predominantly silyl groups of the second type.

Actually, the amount of surface area of the porous support which is considered to be in the external zone versus the amount considered to be in the internal zone may vary. Preferred for purposes of this invention is the situation where the internal zone approximately comprises the internal 90 percent of the surface area and the external zone approximately comprises the external 10 percent of the surface area of the porous material. Use of a larger amount of halosilane will result in a greater degree of penetration into the interior of the porous support, will cause reaction with a greater number of hydroxyl groups on the surfaces of the porous support and will create a larger external zone occupying a greater percentage of the surface area of the porous support. Thus, the external zone may range from 0.5% to 50% of the surface area and the internal zone may range from 50-99.5% of the surface area.

In any event, it is possible to control the degree of catalyzed halosilylation so that the size of the external zone is controlled. This enables one to produce dual zone materials having varying degrees of capacity for separation, such as for use as packing materials in liquid chromatography or otherwise.

Accordingly, it is an object of the present invention to provide an improved method for production of dual zone porous materials by use of catalyzed halosilylation and to provide dual zone materials produced by that method. Other objects and advantages of the invention will become apparent from the following detailed description and the appended claims.

The porous materials found useful in this invention are those materials which are porous solids having hydroxyl groups on their surfaces. Such materials, for example, are silica, silica gel, alumina, stannia, titania, zirconia and the like. Also, these materials can be porous glass, porous ceramic or plastic as long as the material has, or will form, hydroxyl groups on its surface.

The form of the porous material is not overly critical. Particulate porous materials, as well as filaments, slabs, discs, blocks, spheres, films and other such forms can be used in this invention. Also contemplated within the scope of this invention is the treatment of particulate materials by the process of this invention and the subsequent forming of the treated particulate materials into slabs, discs, blocks, spheres, films, membranes, sheets and the like.

Preferred for this invention are the porous metalloid oxides, metallic oxides and mixtures thereof such as silica, alumina, zirconia and titania in all of their related forms. Most preferred are particulate silicas which may vary in pore diameter from 5x10⁻⁹ to 2x10⁻⁷ nm (50 to 2000 angstroms) and in particle size from 3 to 1000 micro-meters, for example.

As mentioned, the first step in the production of the dual zone porous material of the present invention is forming a suspension of the porous support in a solvent. The solvent is preferably an aprotic solvent and most preferably a non-polar solvent, for example, hexane, octane, decane, toluene or mixtures thereof. Preferably, porous silica particles having a particle size of from 3 to 1000 micro-meters are mixed with the solvent in the amount of 0.1% to 40 w/v%.

As also mentioned the lewis base catalyst may be added at this stage. The catalyst may be an amine like pyridine or ammonia; although, imidazole is the preferred catalyst. Nucleophilic agents that are known to form complexes with halosilane under some conditions, such as hexamethylphosphoramide, as well as others that are known to strongly promote silane solvolysis, such as dimethylsulfoxide, are also useable.

The amount of catalyst to be used must be at least 0.05 molecules/nM² of silica surface. The preferred amount of catalyst used is .2 to 4.8 m/nM².

To the porous support suspension there is next added a halosilane, which is preferably in a solvent based mixture, preferrably using the same solvent as that used in the porous support suspension. The halosilane is one having silyl groups of a first type. The preferred halosilane has the formula LₘMe₃₋ₘSiC₂H₄CₙX₂ₙ₊₁, wherein L is a non-fluorine halogen, Me is methyl, X is a halogen which may be the same as or different than L, n is 1 or more and m is 1-3. Most preferred is C₄F₉C₂H₄SiMe₂Cl, i.e. fluoroaklylsilane containing C₄H₉; although, CF₃, C₂F₅, C₃F₇, etc. could also be used.

Fluoroalkylsilanes are most preferred in that they can be used to produce a dual zone porous material having fluoroalkylsilyl groups in the external zone. The fluoroalkylsilyl groups serve as a lipophobic phase which is less adsorptive to proteinaceous substances when the dual zone porous material is used as a reverse phase packing material for high-pressure liquid chromatographic blood serum analysis as disclosed in US Patent No. 4 778 600.

The halosilane may be used in a amount varying from 0.01 to 2.0 m/nM² and preferably the porous support is contacted with 0.2 m/nM² of halosilane, i.e. 0.2 molecules of halosilane per square nanometer of surface area of the porous support.

The catalyzed halosilylation can be carried out in a period of time of from 1 minute to 24 hours. Generally, for purposes of this invention, it is preferred to carry out the catalyzed halosilylation over about a 30 minute to 6 hour time period to ensure that the external surface of the porous material is uniformly treated.

The temperature at which the catalyzed halosilylation is carried out is not narrowly critical and can range from 0°C. to 400°C. Preferred is a room temperature to 200°C. reaction mixture temperature.

Generally, the external zone can be the exterior 0.5% to 50% of the surface area of the porous support. However, there are often minor differences between the external and the average surface composition due to random scatter in analytical results. Furthermore, real differences between two compositions must be large enough to significantly affect properties of the material. In view of these considerations, meaningful dual zone character is attained only when either of the following conditions are met:
(a)$\frac{\text{Γ ₁ (E)}}{\text{Γ ₁ (A)}} \text{≧ 1.5, Γ₁ (E) ≧ 0.3 molecules/nM² and Γ₂ (A) ≧ 0.1 molecules/nM²}$
(b)$\frac{\text{Γ ₁ (E)}}{\text{Γ ₁ (A)}} \text{≧ 1.5, Γ₁ (E) ≧ 15% of saturation of the surface of the porous material; and Γ₂ (A) ≧ 5% of saturation of the surface of the porous material}$

wherein Γ(E) is the external surface density in Molecules/nM² as inferred by Electron Spectroscopy Chemical Analysis and wherein Γ₁ (A) and Γ₂ (A) are like measurements of average surface density as measured by bulk analysis and wherein subscripts 1 and 2 refer to the groups immobilized in reaction first with the catalyzed halosilane and, then, with the second silane respectively.

Concentration is expressed in appropriate units such as molecules per square nanometers (m/nM²).$\text{Γ ₁(A) =} \frac{\text{6 X₁}}{\text{10S}} \text{10⁶}$$\text{Γ ₁ (E) =} \frac{\text{R₁ (E) Γ °₁(A)}}{\text{R°₁(A)}}$${\text{R₁(E) = A}}_{\text{j}} {\text{/ A}}_{\text{r}}$
where X₁ is the amount of some group (labeled 1) as measured in moles per gram of silica by bulk elemental analysis, S is the specific surface area expressed in square meters per gram of silica and R₁(E) is the ESCA-measured ratio of the surface atomic composition of element j, Aj, to that of element r, Aᵣ. Element j is chosen to be unique to group 1 and element r is chosen to come primarily from the porous substrate. Silicon was chosen as the reference element, r, since the contribution to A_{Si} by the immobilized silane is relatively small. The analogous quantities, Γ °₁(A) and R°₁(A), are found by measurements on a silica possessing immobilized group #1 that does not have a compositional gradient. Such materials are easily prepared by exhaustive treatment with a single silylating agent.

Also included within the scope of this invention is a method of preaparing intermediate compositions. These compositions consist of a porous material having reacted to its exterior surface, immobilized silicon containing groups and whose porous interior surface contains hydroxyls. The supra quantitative conditions (a) and (b) are modified in the intermediates by dropping the requirements that Γ₂ ≧ 0.1 or 5% of saturation.

These intermediates are useful products for the method disclosed supra for providing dual zone materials using reactive silanes to treat the interior pore surfaces.

Thus, while with a silica porous support it is possible to consider the unreacted silanols provided naturally on the internal surfaces as an internal zone, preferably silyl groups of a second type are formed by contacting the porous support having silyl groups of the first type predominantly on the external surfces with a silane which has silyl groups of the second type and which is capable of diffusing into the interior of the porous support.

The object of this preferred step is to permit the diffusion of the second silane into the pores of the porous support and to allow reaction of this silane with the hydroxyl groups that are covalently bonded to the internal surfaces. If water has been added during this reaction step, it may actually be the silanol-bearing hydrolysis product of the silane which reacts with the internal zone hydroxyl groups. Since the accessible external zone hydroxyls of the porous material have been effectively removed by the catalyzed halosilylation the second silane does not have available to it accessible reactive sites on the external surfaces of the porous support. Thus the second silane has only the hydroxyls remaining on the internal surfaces of the porous support available for reaction.

Therefore, this step must be carried out for a sufficient period of time to allow for the diffusion of the second silane having silyl groups of a second type into the pores and reaction of the second silane with the internal zone hydroxyl groups therein (or hydrolysis of the silane and then diffusion of the hydrolyzate into the pore to react).

This step can be carried out for a period of time of from several minutes to several hours. Preferred for this invention is a reaction time for this step of from 10 minutes to 24 hours. Most preferred is a time of 1 to 6 hours.

The temperature at which this step is carried out is not narrowly critical. As one would expect, increased temperatures enhance the rate of reaction. Increasing the temperature does not appear to promote too many undesirable side reactions. Thus, the temperature used in this step can range from 0°C to 400°C. Most preferred is the reflux temperature of the reaction at about about 70°C. to 120°C.

The amount of second silane having silyl groups of the second type useful in this invention depends on how many of the surface hydroxyls of the pore interior one wishes to treat. An excess of the second silane may be used as this silane does not displace any of the external surface groups obtained by the catalyzed halosilylation.

The reactive silanes useful in this step are those kinds of silanes which are recognized as conventional silylation reagents. Thus, the second silane may be any of the reactive silanes used in step III of parent application Serial No. 154,754, filed February 11, 1988. Preferred as a second silane are silanes such as those having the general formula R₄₋ₑSiXₑ wherein R is independently selected from hydrogen, alkyl groups having 1 to 20 carbon atoms, phenyl, vinyl and allyl; X is a hydrolyzable radical selected from chlorine, alkoxy having 1 to 4 carbon atoms, acetoxy, amine and amido radicals; and e has a value of 1, 2 or 3. Other organofunctional silanes may also be used.

Specific silanes which are useful herein include: trimethylchlorosilane; dimethyldichlorosilane; hexamethyldisilazane; N,N'-bis(trimethylsilyl)urea; N-trimethylsilyldiethylamine; N-trimethylsilylimidazole; N,O-bis(trimethylsilyl)acetamide; N,O-bis(trimethylsilyl)trifluoroacetamide); N-methyl-N-trimethylsilyltrifluoroacetamide; t-butyldimethylsilylimidazole; N-trimethylsilylacetamide; N-trimethylsilylpiperidine; hexamethyldisilthiane; O-trimethylsilylacetate; O-trimethylsilyltrifluoroacetate; N-trimethylsilyldimethylamine; N-trimethylsilylmorpholine; N-trimethylsilylpyrrolidine; and N-trimethylsilylacetanilide.

Yet another aspect of this invention is the use in this step of organofunctional silanes to silylate the porous material. Such silanes useful in this invention include, for example, (alpha-methacryloxypropyl)trimethoxysilane; (4-aminopropyl)triethoxysilane; gamma-(beta-aminoethylamino)-propylltrimethoxysilane; (gamma-glycidoxypropyl)trimethoxysilane; beta-(3,4-epoxycyclohexyl)-ethylltrimethoxysilane; (beta-mercaptoethyl) trimethoxysilane; (gamma-mercaptopropyl) trimethoxysilane; (gamma-chloropropyl) trimethoxysilane;
CH₂=CHC₆H₄CH₂NH(CH₂)₂NH(CH₂)₃Si(OCH₃)₃·HCl;
(CH₃O)₃Si(CH₂)₃N(CH₃)₂C₁₈H₃₇Cl⁻;
(CH₃)₃Si(CH₂)₃N(CH₃)₂C₁₂H₂₅Cl⁻;
(CH₃O)₃Si(CH₂)₃NCH₃(C₁₂H₂₅)₂Cl⁻;

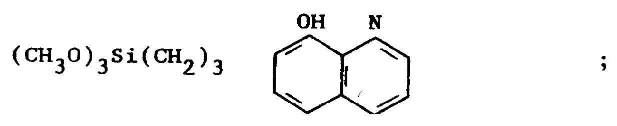

(CH₃O)₃Si(CH₂)₉CH₃; (CH₃O)₃Si(CH₂)₁₉CH₃ and the like. These silanes will impart a variety of useful chemical properties to the internal zone which can be usefully combined with valuable transport properties of the external zone groups.

For example, the external groups may enhance the ion selectively of chelating groups covalently bonded to the interior surface.

When it is determined that the reaction in this step is essentially finished, the product is typically isolated from the reaction mixture. Thus, the final step of this process is the isolation of such products from the reaction mixture. This can be accomplished in a number of ways. For example, the liquid can be decanted, the porous material washed and the liquid decanted successively, or the reaction mixture can be filtered to remove the liquid from the solid product. The final product can be used in this form or it can be dried. If the final product is other than particulate in form it can be used as is or it can be further shaped and formed without losing beneficial properties. If the material is in a particulate form it can be used as is or it can be compressed, sintered or otherwise formed.

So that those skilled in the art may appreciate and understand the invention described herein, the following examples are offered for illustration purposes only. The examples should not be costrued as limiting the invention as defined in the claims.

Six examples of this new route to dual zone materials are given. Three examples of the failure of "uncatalyzed" chlorosilanes to afford dual zone materials are given. Two different porous silicas were used: 1) Baker #3405-1 chromatographic grade, 0.25mm to 0.074mm (60-200 mesh), 6x10⁻⁸m (60 °A) pore diameter, 300 M²/g specific surface area and 2) Amicon #84224, 20 micrometer particles, 2.5x10⁻⁷m (250 °A) pore diameter, 320 M²/g specific surface area.

### Example 1: Preparation of C₄F₉C₂H₄Me₂Si/SiOH dual zone material

1.00g (1.2 x 10⁻³ eq. OH @ 2.4 OH/nM²) of dried Baker silica (vacuum oven/180°C./16 hours) and 1000cm³ octane along with 0.017g (2.5 x 10⁻⁴ eq. or 0.5 molecules/nanometer m/nM²) of imidazole were added to a 500 cm³ indented round-bottomed flask equipped with an air-motor driven paddle, an addition funnel and a condenser topped with a N₂ sweep. This mixture was stirred 10 minutes and heated to solvent reflux at 125°C. to produce a silica suspension. Then a freshly prepared solution of 0.034g (1.0 x 10⁻⁴ eq. or 0.20 m/nM²) of C₄F₉C₂H₄Me₂SiCl (PFBCl) in 30cm³ octane was added over 15 minutes with vigorous stirring. The reaction mixture was then refluxed 45 minutes without stirring. After cooling, the silica was isolated by filtration and washed three times with octane and three times with diethyl ether. Finally, the treated silica was dried in a vaccum oven at 80°C. for 3 hours prior to analysis or further work.

Bulk analysis gave a value of 1.04 wt% F, corresponding to an average surface concentration of 0.12 m/nM² of PFB. External surface analysis by ESCA gave a value of 0.54F/Si, corresponding to a concentration at the external surface of 0.75 m/nM² of PFB. Thus this material meets modified condition (a) for a dual zone material.

Bulk analytical values were converted to average surface concentrations using a value of 300 M²/g for the specific surface area of the silica. Calculation of the external surface concentration was made using reference values of 1.11 F/Si (ESCA) and 10.74 wt.% F. These reference values were obtained for Baker silica that had been thoroughly treated with an excess of the N-methylacetamide derivative of the above chlorosilane to ensure that no compositional gradient was present.

### Example 2: Preparation of a PFB/TMS dual zone material

0.35g of the silica treated as in Example 1 and 100 cm³ octane were added to a 200cm³ round-bottomed flask equipped with a condenser topped with a N₂ sweep. The slurry was swirled 1 minute and 0.13cm³ (8.4 x 10⁻⁴ eq. or twice eq. OH) of N-methyl-N-trimethylsilylacetamide (TMSA) was added and the flask was heated to reflux for 2 hours. After cooling, the treated silica was isolated, washed and dried as above.

Bulk analysis gave values of 1.04 wt% F and 4.26 wt% C, corresponding to average surface concentrations of 0.13 m/nM² of PFB and 2.25 m/nM² of TMS (trimethylsilyl). External surface analysis by ESCA gave a value of 0.49 F/Si, corresponding to 0.69 m/nM² of PFB. Thus this material meets condition (a) for a dual zone material.

### Example 3: Preparation of PFB/SiOH dual zone material

The same procedure as in Example 1 was used with one exception: 20.3 mR of pyridine (0.5 m/nM²) replaced the imidazole.

Bulk analysis gave a value of 1.38 wt% F, corresponding to an average surface concentration of 0.17 m/nM² of PFB. External surface analysis gave a value of 0.23 F/Si, corresponding to 0.32 m/nM². Thus the material met modified condition (a) for a dual zone material.

### Example 4: Failure to prepare PFB/SiOH dual zone material

The same procedure as in Example 1 was used but the imidazole catalyst was omitted.

Bulk analysis gave a value of 0.29 wt% F, corresponding to an average surface concentration of 0.035 m/nM² of PFB. External surface analysis gave a value of 0.057 F/Si, corresponding to 0.08 m/nM². Thus, this material met none of the conditions or modified conditions (a) or (b) and should not be considered a dual zone material.

### Example 5: Preparation of PFB/SiOH dual zone material

The same procedure as in Example 1 was used with the following exceptions:

1.00g (1.3 x 10⁻³ eq. OH @ 2.4 OH/nM²) of similarly dried Amicon silica was used which had been twice-refluxed in dilute nitric acid followed by exhaustive washings with distilled water to remove initial catalytic activity of this particular silica. (The activity was relative to disiloxane formation from trimethylsilanol and may have had no effect on surface silylation kinetics). 0.018g (2.7 x 10⁻⁴ eq. or 0.5 m/nM²) of imidazole and 0.036g (1.1 x 10⁻⁴ eq. or 0.2 n/nM²) of PFBCl was used.

Bulk analysis gave a value of 1.58 wt% F, corresponding to 0.18 m/nM² average surface concentration of PFB. External surface analysis by ESCA gave a value of 0.39 F/Si, corresponding to 0.60 m/nm² of PFB. Thus this material meets modified condition (a) for a dual zone material.

Bulk analytical values were converted to average surface concentrations using a value of 320 m²/g for the specific surface area of this particular silica. Calculation of the external surface concentration was made using reference values of 1.21 F/Si (ESCA) and 12.86 wt% F. These reference values were obtained for Amicon silica that had been thoroughly treated with excess of N-methylacetamide derivative of the above chlorosilane to ensure that no compositional gradient was present. Conversions in Examples 6 and 7 were done in the same way.

### Example 6: Preparation of PFB/TMS dual zone material

0.35 g of the above treated silica of Example 5 was treated with 0.14cm³ of TMSA (8.9 x 10⁻⁴ eq.or twice eq. OH), isolated, washed and dried as in the procedure given for Example 2.

Bulk analysis gave values of 1.47 wt% F and 4.69 wt% C, corresponding to average surface concentrations of 0.17 m/nM² of PFB and 2.28 n/nM² of TMS. External surface analysis by ESCA gave a value of 0.37 F/Si, corresponding to 0.56 m/nM² of PFB. Thus the material met modified condition (a) for a dual zone material.

### Example 7: Failure to prepare a PFB/SiOH dual zone material

The procedure of Example 5 was repeated in the absence of an intentionally added catalyst.

Bulk analysis gave a value of 0.56 wt% F, corresponding to an average surface concentration of 0.06 m/nM² of PFB. External surface analysis by ESCA gave a value of 0.07 F/Si, corresponding to 0.11 m/nM² of PFB. Thus the material met none of the conditions or modified conditions (a) and (b) and should not be considered a dual zone material.

### Example 8: Preparation of a CF₃CH₂CH₂Me₂SI/TMS dual zone material

1.00g (1.2 x 10⁻³ eq. OH @ 2.4 OH/nM²) of Baker silica dried at 180°C./16 hours under vacuum and 100cm³ of hexane along with 0.017g (2.5 x 10⁻⁴ eq. or 0.5 m/nM²) of imidazole were added to a 500cm³ indented round-bottomed flask equipped with an air motor-driven paddle, an addition funnel and a condenser topped with a N₂ sweep. This mixture was stirred 10 minutes and heated to reflux at 69°C. During reflux, a freshly prepared solution of 16.9 ul (or 0.2 m/nM²) of CF₃CH₂CH₂Me₂SiCl - denoted TFSCl - in 15cm³ of hexane was added over 5 minutes and subsequently stirred for 1 minute. Then 0.18cc (2.8 m/nM²) of TMSCl in 15cm³ of hexane was added to the mixture and refluxed for two hours without stirring. Solids were removed from the cooled mixture via filtration, washed twice with hexane, 50/50 acetonitrile/water to remove salts, acetonitrile and finally diethyl ether. Treated silica was vacuum-oven dried for 3 hours @ 80°C. and submitted for analysis.

Bulk analysis gave values of 0.30 wt% F and 2.66 wt% C, corresponding to average surface concentrations of 0.11 m/nM² of TFS and 1.38 m/nM² of TMS. External surface analysis by ESCA gave a value of 0.161 F/Si, corresponding to 0.64 m/nM² of TFS. Thus this material met condition (a) for a dual zone material.

Bulk analytical values were converted to average surface concentrations using a value of 300 M²/g for the specific surface area of the Baker silica. Calculation of the external surface concentration was made using reference values of 0.412 F/Si (ESCA) and 4.10 wt% F. These reference values were obtained for Baker silica which had been thoroughly treated three times with an excess of TFSA at room temperature to ensure that no compositional gradient was present. Conversion in Example 9 was done in this same way.

### Example 9: Failure to prepare a TFS/TMS dual zone material

The attempted preparation followed the procedure given in Example 8, with the exception that no catalyst (imidazole) was added.

Bulk analysis gave 0.11 wt% F and 0.60 wt% C, corresponding to average surface concentrations of 0.039 m/nM² of TFS and 0.27 m/nM² of TMS. External surface analysis by ESCA gave a value of 0.016 F/Si, corresponding to 0.064 m/nM² of TFS. Thus this material failed to meet conditions or modified conditions (a) or (b) and should not be considered to be a dual zone material.

## Claims

1. A method of preparing a dual zone porous material having an external zone which comprises the external surfaces of the porous material and having an internal zone which comprises the internal surfaces of the porous material, comprising:
a) providing a hydroxyl-bearing porous support selected from the group consisting of porous metalloid oxides, porous metallic oxides and mixtures thereof,
b) forming a porous support suspension by mixing said porous support with a solvent, said suspension also containing a Lewis base catalyst,
c) adding to said suspension a halosilane comprising at least one leaving group wherein at least one of the leaving groups is a non-fluorine halogen, said halosilane being added in an amount which does not exceed 2.00 molecules/nM² of the silica in said suspension and which has silyl groups of a first type and which is catalysed by said catalyst wherein silyl groups of the first type are provided predominantly on the external surfaces of said porous support,
d) providing silyl groups of the second type predominantly on the internal surfaces of said porous support, and
e) subsequently isolating the so-treated porous support and thereby providing said dual zone porous material.

2. The method of claim 1 wherein said porous support is particulate silica.

3. The method of claim 1 in which the rate of addition of said halosilane does not exceed 0.2 molecules/minute/nM² of silica in said suspension.

4. A method of preparing an intermediate useful in the preparation of dual zone porous materials having an external zone which comprises the external surfaces of the porous material and having an internal zone which comprises the internal surfaces of the porous material, comprising:
a) providing a hydroxyl-bearing porous support selected from the group consisting of porous metalloid oxides, porous metallic oxides and mixtures thereof,
b) forming a porous support suspension by mixing said porous support with a solvent, said suspension also containing a lewis base catalyst,
c) adding to said suspension a halosilane comprising at least one leaving group wherein at least one of the leaving groups is a non-fluorine halogen, said halosilane being added in an amount which does not 5 exceed 2.00 molecules/nM² of the silica in said suspension and which has silyl groups of a first type and which is catalysed by said catalyst wherein silyl groups of the first type are provided predominantly on the external surfaces of said porous support,
d) subsequently isolating the so-treated porous support and thereby providing said intermediate.

5. The method of claim 4 wherein said porous support is particulate silica.

6. The method of claim 4 in which the rate of addition of said halosilane 0.2 molecules/minute/nM² of silica in said suspension.

## Patentansprüche

1. Verfahren zur Herstellung eines porösen Materials mit zwei Zonen, und zwar einer externen Zone, die die äußeren Oberflächen des porösen Materials umfaßt, und einer inneren Zone, die die inneren Oberflächen des porösen Materials umfaßt, bei dem man
(a) einen Hydroxylgruppen tragenden porosen Trägerstoff bereitstellt, ausgewählt aus der Gruppe, bestehend aus porösen Oxiden von Metalloiden, porösen Oxiden von Metallen und Gemischen dieser Oxide,
(b) durch Mischen des porösen Trägerstoffes mit einem Lösungsmittel eine Suspension des Trägerstoffes erzeugt, wobei die Suspension auch eine Lewis-Base als Katalysator enthält,
(c) der Suspension ein Halogensilan zusetzt, das zumindest eine austretende Gruppe besitzt, wobei zumindest eine der austretenden Gruppen ein Halogen außer Fluor ist, wobei das Halogensilan in einer Menge zugesetzt wird, die 2,00 Moleküle/nM² des Siliziumdioxids in der Suspension nicht überschreitet, und Silylgruppen einer ersten Art besitzt, wobei das Halogensilan durch den Katalysator katalysiert wird und wobei Silylgruppen der ersten Art vorwiegend auf den äußeren Oberflächen des porösen Trägerstoffes angeordnet werden,
(d) Silylgruppen einer zweiten Art vorwiegend auf den inneren Oberflächen des porösen Trägerstoffes anordnet, und
(e) danach den so behandelten porösen Trägerstoff abtrennt und dadurch das poröse Material mit zwei Zonen erhält.

2. Verfahren nach Anspruch 1, wobei der poröse Trägerstoff feinteiliges Siliziumdioxid ist.

3. Verfahren nach Anspruch 1, wobei die Geschwindigkeit der Zuführung des Halogensilans 0,2 Moleküle/Minute/nM² des Siliziumdioxids in der Suspension nicht überschreitet.

4. Verfahren zur Herstellung eines Zwischenproduktes, das nützlich ist für die Herstellung eines porösen Materials mit einer äußeren Zone, die die äußeren Oberflächen des porösen Materials umfaßt, und einer inneren Zone, die die inneren Oberflächen des porösen Materials umfaßt, bei dem man
(a) einen Hydroxylgruppen tragenden porösen Trägerstoff bereitstellt, ausgewählt aus der Gruppe, bestehend aus porösen Oxiden von Metalloiden, porösen Oxiden von Metallen und Gemischen dieser Oxide,
(b) durch Mischen des porösen Trägerstoffes mit einem Lösungsmittel eine Suspension des Trägerstoffes erzeugt, wobei die Suspension auch eine Lewis-Base als Katalysator enthält,
(c) der Suspension ein Halogensilan zusetzt, das zumindest eine austretende Gruppe besitzt, wobei zumindest eine der austretenden Gruppen ein Halogen außer Fluor ist, wobei das Halogensilan in einer Menge zugesetzt wird, die 2,00 Moleküle/nM² des Siliziumdioxids in der Suspension nicht überschreitet, und Silylgruppen einer ersten Art besitzt, wobei das Halogensilan durch den Katalysator katalysiert wird und wobei Silylgruppen der ersten Art vorwiegend auf den äußeren Oberflächen des porösen Trägerstoffes angeordnet werden,
(d) danach den so behandelten porösen Trägerstoff abtrennt und dadurch das Zwischenprodukt erhält.

5. Verfahren nach Anspruch 4, wobei der poröse Trägerstoff feinteiliges Siliziumdioxid ist.

6. Verfahren nach Anspruch 4, wobei die Geschwindigkeit der Zuführung des Halogensilans 0,2 Moleküle/Minute/nM² des Siliziumdioxids in der Suspension nicht überschreitet.

## Revendications

1. Procédé de préparation d'un matériau poreux à double zone, ayant une zone externe qui comprend les surfaces externes du materiau poreux et une zone interne qui comprend les surfaces internes du matériau poreux, comprenant :
a) la fourniture d'un support poreux comportant des groupes hydroxyles, choisi dans le groupe formé des oxydes de métalloïdes poreux, des oxydes métalliques poreux, et des mélanges de ceux-ci,
b) la formation d'une suspension du support poreux, en mélangeant ledit support poreux avec un solvant, ladite suspension contenant aussi un catalyseur du type base de Lewis,
c) l'addition à ladite suspension d'un halogénosilane comprenant au moins un groupe labile dans lequel au moins un des groupes labiles est un halogène autre que le fluor, ledit halogénosilane étant ajouté en une quantité qui ne dépasse pas 2,00 molécules/nM² de la silice dans ladite suspension et qui a des groupes silyles d'un premier type et qui est catalysé par ledit catalyseur, les groupes silyles du premier type étant fournis de façon predominante sur les surfaces externes dudit support poreux,
d) la fourniture de groupes silyles du deuxième type de façon prédominante sur les surfaces internes dudit support poreux, et
e) ensuite, l'isolation du support poreux ainsi traité, pour produire ainsi ledit matériau poreux à double zone.

2. Procédé de la revendication 1, selon lequel ledit support poreux est formé de particules de silice.

3. Procédé de la revendication 1, selon lequel la vitesse d'addition dudit halogénosilane dans ladite suspension ne dépasse pas 0,2 molécule/minute/nM² de silice.

4. Procédé de préparation d'un produit intermédiaire pouvant être utilisé pour la préparation de matériaux poreux à double zone, ayant une zone externe qui comprend les surfaces externes du matériau poreux et une zone interne qui comprend les surfaces internes du matériau poreux, comprenant :
a) la fourniture d'un support poreux comportant des groupes hydroxyles, choisi dans le groupe formé des oxydes de métalloïdes poreux, des oxydes métalliques poreux, et des mélanges de ceux-ci,
b) la formation d'une suspension du support poreux, en mélangeant ledit support poreux avec un solvant, ladite suspension contenant aussi un catalyseur du type base de Lewis,
c) l'addition à ladite suspension d'un halogénosilane comprenant au moins un groupe labile, dans lequel au moins un des groupes labiles est un halogène autre que le fluor, ledit halogénosilane étant ajouté en une quantité qui ne dépasse pas 2,00 molécules/nM² de la silice dans ladite suspension et qui a des groupes silyles d'un premier type et qui est catalysé par ledit catalyseur, les groupes silyles du premier type étant fournis de façon prédominante sur les surfaces externes dudit support poreux,
d) ensuite, l'isolation du support poreux ainsi traité, pour produire ainsi ledit produit intermédiaire.

5. Procédé de la revendication 4, selon lequel ledit support poreux est formé de particules de silice.

6. Procédé de la revendication 4, selon lequel la vitesse d'addition dudit halogénosilane dans ladite suspension ne dépasse pas 0,2 molécule/minute/nM² de silice.
